# EUROPEAN PATENT APPLICATION

(11) **EP 4 436 262 A1**
(43) Date of publication of application: **25.09.2024**
(21) Application number: 22894766.9
(22) Date of filing: 15.11.2022
(51) Int. Cl.: H04W 48/08

(54) **HYBRID MULTIPLE ACCESS COMMUNICATION METHOD AND APPARATUS, AND TERMINAL AND NETWORK-SIDE DEVICE**

(30) Priority: 19.11.2021 CN 202111402807
(71) Applicant: Vivo Mobile Communication Co., Ltd., Dongguan, Guangdong 523863 (CN)
(72) Inventor: HUANG, Wei, Dongguan, Guangdong 523863 (CN); JIANG, Dajie, Dongguan, Guangdong 523863 (CN); QU, Xin, Dongguan, Guangdong 523863 (CN)
(74) Representative: Murgitroyd & Company
(86) International application number: PCT/CN2022/131874
(87) International publication number: WO 2023/088232

(57) **Abstract**

This application discloses a hybrid multiple access communications method and apparatus, a terminal, and a network side device, and pertains to the field of communications technologies. The method according to the embodiments of this application includes: obtaining, by a terminal, first indication information from a network side device, where the first indication information is used to indicate the terminal to perform data transmission by using at least two multiple access modes; and performing, by the terminal based on indication of the first indication information, data transmission by using the at least two multiple access modes.

## Description

### CROSS-REFERENCE TO RELATED APPLICATION

This application claims priority to Chinese Patent Application No. 202111402807.4, filed on November 19, 2021 and entitled "HYBRID MULTIPLE ACCESS COMMUNICATIONS METHOD AND APPARATUS, TERMINAL, AND NETWORK SIDE DEVICE", which is incorporated herein by reference in its entirety.

### TECHNICAL FIELD

This application pertains to the field of communications technologies, and in particular, to a hybrid multiple access communications method and apparatus, a terminal, and a network side device.

### BACKGROUND

With the development of communications technologies, the future 6G communications network needs to support massive Internet of Everything. The number of Internet of Things devices will reach 100 billion, and a connection density is 10-100 times higher than that of 5G, reaching 10-100 devices /m².

Such a massive number of devices need to access the network. If the current multiple access technology is adopted, it is difficult to ensure the connection requirements of terminal devices. For example, although orthogonal multiple access (Orthogonal Multiple Access, OMA) is relatively simple to implement and has stable performance, the number of users supported in a same cell based on OMA is very limited because different users use orthogonal resources. Non-orthogonal multiple access (Non-orthogonal Multiple Access, NOMA) can improve an overload rate of multi-user access on the basis of OMA, but it is also difficult to meet the connection requirements for the 100-billion massive Internet of Things devices in the future. A power domain NOMA is used as an example, when the number of access users is too large, the performance of eliminating interference between multiple users based on successive interference cancellation technology will be poor, and thus large-scale user access cannot be supported. Therefore, how to realize the communications method in which multiple users accessing the network simultaneously is supported is an urgent technical problem that needs to be resolved by s person skilled in the art.

### SUMMARY

Embodiments of this application provide a hybrid multiple access communications method and apparatus, a terminal, and a network side device, to resolve a problem for the communications method of how to support multiple users accessing the network simultaneously.

According to a first aspect, a hybrid multiple access communications method is provided and is applied to a terminal, where the method includes:
obtaining, by a terminal, first indication information from a network side device, where the first indication information is used to indicate the terminal to perform data transmission by using at least two multiple access modes; and
performing, by the terminal based on indication of the first indication information, data transmission by using the at least two multiple access modes.

According to a second aspect, a hybrid multiple access communications method is provided and is applied to a network side device, where the method includes:
sending, by a network side device, first indication information to a terminal, where the first indication information is used to indicate the terminal to perform data transmission by using at least two multiple access modes; and
receiving, by the network side device, data transmitted by the terminal by using the at least two multiple access modes.

According to a third aspect, a hybrid multiple access communications apparatus is provided, including:
an obtaining module, configured to obtain first indication information from a network side device, where the first indication information is used to indicate the terminal to perform data transmission by using at least two multiple access modes; and
a processing module, configured to perform, based on indication of the first indication information, data transmission by using the at least two multiple access modes.

According to a fourth aspect, a hybrid multiple access communications apparatus is provided, including:
a sending module, configured to send first indication information to a terminal, where the first indication information is used to indicate the terminal to perform data transmission by using at least two multiple access modes; and
a receiving module, configured to receive data transmitted by the terminal by using the at least two multiple access modes.

According to a fifth aspect, a terminal is provided, and the terminal includes a processor and a memory, where the memory stores a program or an instruction executable on the processor and a program or an instruction stored in the memory and executable on the processor, and when the program or the instruction is executed by the processor, steps of the method according to the first aspect are implemented.

According to a sixth aspect, a terminal is provided, including a processor and a communications interface, where the communications interface is configured to obtain first indication information from a network side device, the first indication information is used to indicate the terminal to perform data transmission by using at least two multiple access modes; and the processor is configured to perform, based on indication of the first indication information, data transmission by using the at least two multiple access modes.

According to a seventh aspect, a network side device is provided. The network side device includes a processor and a memory, and the memory stores a program or an instruction executable on the processor, where the program or the instruction is executed by the processor to implement the steps of the method according to the second aspect.

According to an eighth aspect, a network side device is provided, including a processor and a communications interface, where the communications interface is configured to: send first indication information to a terminal, where the first indication information is used to indicate the terminal to perform data transmission by using at least two multiple access modes; and receive data transmitted by the terminal by using the at least two multiple access modes.

According to a ninth aspect, a communications system is provided, including a terminal and a network side device, where the terminal may be configured to perform steps of the hybrid multiple access communications method according to the first aspect, and the network side device may be configured to perform steps of the hybrid multiple access communications method according to the second aspect.

According to a tenth aspect, a readable storage medium is provided, where the readable storage medium stores a program or an instruction, and when the program or the instruction is executed by a processor, steps of the method according to the first aspect or steps of the method according to the second aspect are implemented.

According to a tenth aspect, a chip is provided. The chip includes a processor and a communications interface, the communications interface is coupled to the processor, and the processor is configured to run a program or an instruction to implement the method according to the first aspect or the second aspect.

According to an eleventh aspect, a computer program/program product is provided, where the computer program/program product is stored in a non-volatile storage medium, and the computer program/program product is executed by at least one processor to implement steps of the method according to the first aspect or the second aspect.

In the embodiments of this application, the terminal obtains first indication information from the network side device, where the first indication information is used to indicate the terminal to perform data transmission by using at least two multiple access modes. The terminal performs, based on indication of the first indication information, data transmission by using the at least two multiple access modes. In a scenario where there are multiple terminals, because the multiple terminals respectively use a plurality of multiple access modes to transmit data, the interference between transmission signals of the multiple terminals is small, so that the receive end can improve the accuracy and efficiency of signal detection, thus meeting the access requirements of a large number of terminals.

### BRIEF DESCRIPTION OF DRAWINGS

FIG. 1 is a structural diagram of a wireless communications system to which embodiments of this application can be applied;
FIG. 2 is a schematic diagram of a successive interference cancellation principle according to an embodiment of this application;
FIG. 3 is a first schematic flowchart of a hybrid multiple access communications method according to an embodiment of this application;
FIG. 4 is a first schematic flowchart of interaction of a hybrid multiple access communications method according to an embodiment of this application;
FIG. 5 is a first schematic diagram of first indication information according to an embodiment of this application;
FIG. 6 is a second schematic diagram of first indication information according to an embodiment of this application;
FIG. 7 is a third schematic diagram of first indication information according to an embodiment of this application;
FIG. 8 is a fourth schematic diagram of first indication information according to an embodiment of this application;
FIG. 9 is a first schematic diagram of grouping of a hybrid multiple access communications method according to an embodiment of this application;
FIG. 10 is a second schematic diagram of grouping of a hybrid multiple access communications method according to an embodiment of this application;
FIG. 11 is a third schematic diagram of grouping of a hybrid multiple access communications method according to an embodiment of this application;
FIG. 12 is a second schematic flowchart of interaction of a hybrid multiple access communications method according to an embodiment of this application;
FIG. 13 is a second schematic flowchart of a hybrid multiple access communications method according to an embodiment of this application;
FIG. 14 is a first schematic diagram of a structure of a hybrid multiple access communications apparatus according to an embodiment of this application;
FIG. 15 is a second schematic diagram of a structure of a hybrid multiple access communications apparatus according to an embodiment of this application;
FIG. 16 is a schematic diagram of a structure of a communications device according to an embodiment of this application;
FIG. 17 is a schematic diagram of a hardware structure of a terminal according to an embodiment of this application; and
FIG. 18 is a schematic diagram of a structure of a network side device according to an embodiment of this application.

### DESCRIPTION OF EMBODIMENTS

The following clearly describes technical solutions in embodiments of this application with reference to accompanying drawings in embodiments of this application. It is clear that the described embodiments are some but not all of embodiments of this application. All other embodiments obtained by persons of ordinary skill in the art based on the embodiments of the disclosure shall fall within the scope of protection of the disclosure.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably, and the described technology can be used not only for the systems and radio technologies mentioned above, but also for other systems and radio technologies. A new radio (New Radio, NR) system is described in the following description for illustrative purposes, and the NR terminology is used in most of the following description, although these technologies can also be applied to applications other than the NR system application, such as the 6th generation (6th Generation, 6G) communications system.

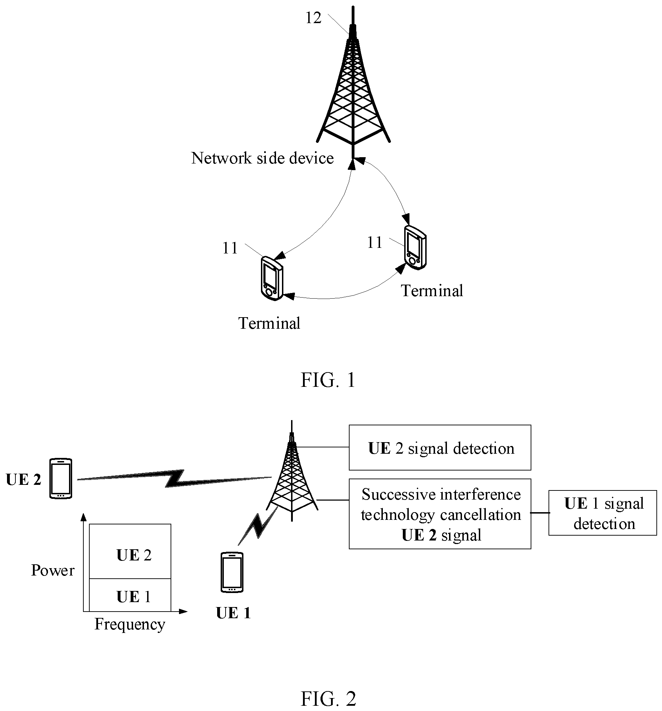

FIG. 1 is a block diagram of a wireless communication system to which embodiments of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (household devices with wireless communications functions, such as a refrigerator, a television, a washing machine, or furniture), a game console, a personal computer (personal computer, PC), a teller machine, or a self-service machine, and the wearable device include a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, a game console, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or another suitable term in the field provided that a same technical effect is achieved. The base station is not limited to a specific technical term. It should be noted that, in the embodiments of this application, only a base station in an NR system is used as an example for description, but a specific type of the base station is not limited.

With the development of communications technologies, the future 6G communications network needs to support massive Internet of Everything. The number of Internet of Things devices will reach 100 billion, and a connection density is 10-100 times higher than that of 5G, reaching 10-100 devices /m².

Massive Internet of Things devices pose new challenges to both cost and power consumption. Cellular networking, low cost, low power consumption and even zero power consumption are the main trends in the development of Internet of Things devices in the future. Such a massive number of low-power or even zero-power passive devices need to access the network, so it is necessary to design a new multiple access mode to ensure the massive connection requirements.

The multiple access mode includes the following types:

### 1. Orthogonal multiple access (OMA)

Orthogonal multiple access (OMA) refers to that the base station allocates orthogonal resources (time, frequency, code word, space) to different users to ensure that signals between users will not interfere with each other. Typical orthogonal multiple access includes frequency division multiple access (Frequency Division Multiple Access, FDMA), time division multiple access (Time Division Multiple Access, TDMA), code division multiple access (Code Division Multiple Access, CDMA), spatial division multiple access (Spatial Division Multiple Access), orthogonal frequency division multiple access (Orthogonal Frequency Division Multiple Access, OFDMA), and the like. The advantage of OMA is that it is simple to implement, and because the resources among users are orthogonal, multi-user interference (Multi-user Interference, MUI) is small.

### 2. Non-orthogonal multiple access (NOMA)

Non-orthogonal multiple access (NOMA) refers to that multiple users can simultaneously transmit data on a same time-frequency resource, that is, resources are non-orthogonal, and multi-user signal demodulation is realized through successive interference cancellation (Successive Interference Cancellation, SIC) at a receive end. Because NOMA can carry multiple users using a same time-frequency code resource simultaneously, it can support larger-scale user access compared with OMA. In addition, NOMA technology can obtain stable performance gain without strongly relying on CSI feedback from the user, so NOMA technology can achieve good performance even in a high-speed mobile scenario. At present, conventional NOMA includes power domain NOMA (Power Domain NOMA), low-density spreading LDS NOMA (Low-density Spreading LDS NOMA), sparse code multiple access (Sparse Code Multiple Access, SCMA), multi-user shared access (Multi-user Shared Access, MUSA), pattern division multiple access (Pattern Division Multiple Access, PDMA), and the like.

Power domain non-orthogonal multiple access (PD-NOMA) is a conventional NOMA technology that is simple to be implemented. PD-NOMA uses non-orthogonal power domain to distinguish multiple users performing transmission in the same time-frequency resource. Uplink PD-NOMA shown in FIG. 2 is used as an example. It is assumed that two users: UE 1 and UE 2 simultaneously transmit data to the base station on a same time-frequency resource, and compared with the UE 2, the UE 1 is closer to the base station with a channel gain of |h_1|>|h_2|. To ensure the fairness of scheduling, power allocated by the base station to the UE 1 and the UE 2 is P_1 and P_2 respectively, and P_1<P_2. When receiving superimposed signals of two users, the base station side demodulates the data of the UE 1 and the UE 2 separately. Because the power allocated to the user of UE 2 is relatively large, signals of the UE 1 can be directly treated as noise during data demodulation of the UE 2, and signals of the UE 2 can be directly demodulated and decoded. After signal demodulation and decoding of the UE 2 is completed, a reconstructed signal of the UE 2 is subtracted from the superimposed signal based on SIC algorithm, and then signal demodulation and decoding of the user of UE 1 is performed.

Although conventional OMA technology is relatively simple to implement and has stable performance, the number of users supported in a same cell based on OMA is limited because different users use orthogonal resources. CDMA is used as an example. CDMA is a common code domain multiple access technology that is simple to implement. Different users use different spreading codes to realize multiplexing on a same time-frequency resource. However, when the number of access users is large, there are self-interference and multi-user interference in CDMA, and the system performance is easy to deteriorate because of obvious near-far effect in CDMA. Because of this, CDMA multiple access does not support large-scale user access.

NOMA can improve an overload rate of multi-user access of the user on the basis of OMA, but the current NOMA technology is also difficult to meet the large-scale Internet of Things services in the future for the requirements of the 100-billion massive Internet of Things devices in the future. A power domain NOMA is used as an example, when the number of access users is too large, the performance of eliminating interference between multiple users based on successive interference cancellation technology will be poor, and thus large-scale user access cannot be supported either.

For example, a conventional low-power or even zero-power device is a backscatter communication (Backscatter Communication, BSC) device, where BSC refers to that the backscatter communications device uses radio frequency signals in other devices or environments to modulate signals to transmit information.

In this embodiment of this application, different terminals respectively use a plurality of multiple access modes for data transmission, so as to meet the connection requirements of a large number of terminals.

With reference to the accompanying drawings, the hybrid multiple access communications method provided in the embodiments of this application is described in detail by using some embodiments and application scenarios thereof.

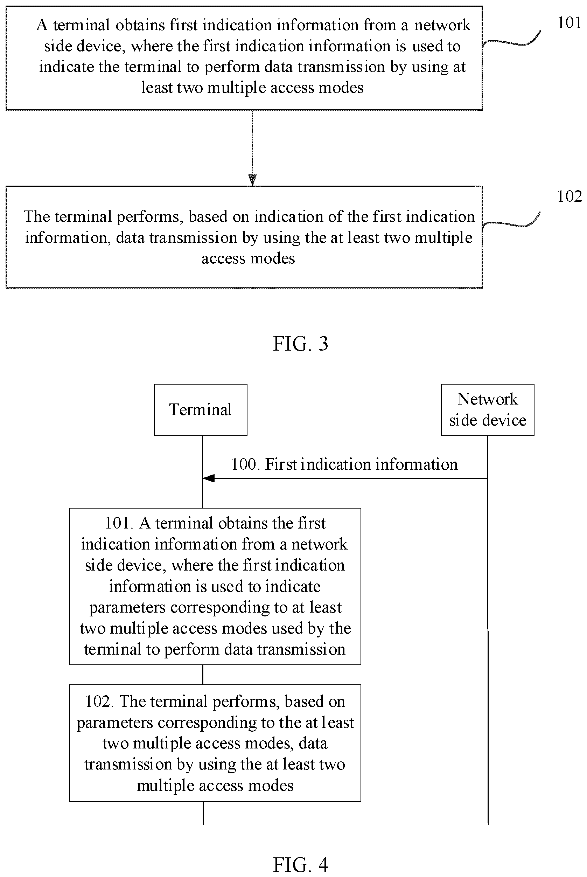

FIG. 3 is a first schematic flowchart of a hybrid multiple access communications method according to an embodiment of this application. As shown in FIG. 3 and FIG. 4, the hybrid multiple access communications method provided in this embodiment includes the following steps.

Step 101. A terminal obtains first indication information from a network side device, where the first indication information is used to indicate the terminal to perform data transmission by using at least two multiple access modes.

Specifically, the network side device sends the first indication information to the terminal, and the first indication information is used to indicate the terminal to perform data transmission by using at least two multiple access modes.

For example, the multiple access modes include a power domain multiple access mode, a code domain multiple access mode, and the like. Optionally, the multiple access modes can also include time/frequency domain multiple access mode, and the like.

Optionally, the first indication information may further explicitly or implicitly indicate a parameter corresponding to the multiple access mode, or the parameter corresponding to the multiple access mode is predefined or preconfigured.

For example, the multiple access modes include a power domain multiple access mode, and the corresponding parameter includes a power domain parameter; and the multiple access mode includes a code domain multiple access mode, and the corresponding parameter includes a code domain parameter.

The terminal obtains the first indication information from a network side device.

Optionally, in other embodiments, other names may be used for the first indication information, which is not limited in this embodiment of this application.

Step 102. The terminal performs, based on indication of the first indication information, data transmission by using the at least two multiple access modes.

Specifically, the terminal performs, based on the at least two multiple access modes indicated by the first indication information, data transmission by using the at least two multiple access modes.

For example, the at least two multiple access modes include a multiple access mode 1 and a multiple access mode 2, and the terminal uses the multiple access mode 1 and the multiple access mode 2 for data transmission based on the parameter corresponding to the multiple access mode 1 and the parameter corresponding to the multiple access mode 2.

According to the method in this embodiment, the terminal obtains first indication information from the network side device, where the first indication information is used to indicate the terminal to perform data transmission by using at least two multiple access modes. The terminal performs, based on indication of the first indication information, data transmission by using the at least two multiple access modes. In a scenario where there are multiple terminals, because the multiple terminals respectively use a plurality of multiple access modes to transmit data, the interference between transmission signals of the multiple terminals is small, so that the receive end can improve the accuracy and efficiency of signal detection, thus meeting the access requirements of a large number of terminals.

In an embodiment, the at least two multiple access modes include a power domain multiple access mode and a code domain multiple access mode; and
parameters corresponding to the at least two multiple access modes include a first power coefficient and a code domain parameter, the first power coefficient is used by the terminal to perform data transmission by using the power domain multiple access mode, and the code domain parameter is used by the terminal to perform data transmission by using the code domain multiple access mode.

Specifically, a parameter corresponding to the power domain multiple access mode includes a first power coefficient, and a parameter corresponding to the code domain multiple access mode includes a code domain parameter, for example, a spreading code or a spreading sequence.

Optionally, if the terminal is a backscatter communication (BSC) terminal, the first power coefficient is a first reflection coefficient.

The power domain multiple access mode includes the power domain NOMA, that is, PD-NOMA.

Optionally, the code domain multiple access mode includes at least one of the following: a code domain non-orthogonal multiple access mode, code division multiple access mode, and multi-user shared access (MUSA), where the code domain parameter is a spreading code or a spreading sequence.

Specifically, the code domain multiple access mode can be non-orthogonal or orthogonal code domain multiple access mode, such as code domain NOMA, MUSA multiple access, code division multiple access (CDMA), and the like.

In an embodiment, the spreading code includes at least one of the following:
an orthogonal or quasi-orthogonal spreading code;
a low density signature (Low density signature, LDS); and
a complex field multivariate code, where
the orthogonal spreading code includes a Walsh spreading code sequence; and the quasi-orthogonal spreading code includes at least one of the following: a pseudo noise (PN) sequence, a Gold code, and a KASAMI code.

Specifically, optional types of the spreading code can be at least one of the above, and the spreading code can be at least one of the following during using the multiple access mode:
an orthogonal or quasi-orthogonal spreading code;
a low density signature (LDS); and
a complex field multivariate code, where
the orthogonal spreading code may be, for example, a Walsh spreading code sequence; and the quasi-orthogonal spreading code may be at least one of the following: a PN sequence, a Gold code, and a KASAMI code.

For LDS, the orthogonal spreading code can also be a check matrix in LDPC code.

The complex field multivariate code can ensure low cross-correlation characteristics. Ternary complex field code is used as an example, where values of the spreading sequence are {0, 1, 1+i, i, -1+i, -1, -1-i, -i, 1-i,}.

In the foregoing implementations, NOMA can improve the overload rate of multi-user access on the basis of OMA, that is, the number of access terminals can be increased, and the code domain multiple access mode is further introduced on the basis of PD-NOMA, which can further increase the number of access terminals to meet the connection requirements of a large number of terminals.

Optionally, in addition to indicating parameters corresponding to the at least two multiple access modes, the first indication information may further be used to indicate at least one of the following:
a first modulation mode, a first channel coding mode, and first resource information.

The first modulation mode may be a modulation mode used by the terminal for data transmission, and the first resource information may be information about a resource used by the terminal for data transmission. Optionally, the resource is a time resource.

The first channel coding mode may be a channel coding mode used by the terminal for data transmission.

In an embodiment, the first indication information is carried by using at least one of the following:
downlink control information (DCI);
a sequence;
a preamble; and
a medium access control control element (Medium Access Control Control Element, MAC CE).

Optionally, DCI can be in a newly designed DCI format, or can be extended on the current DCI format.

Specifically, a sequence may carry the first indication information, and the sequence is different from the spreading sequence.

The preamble, for example, is similar to the preamble in a Wi-Fi system and is used to carry the first indication information.

In the foregoing implementations, the network side device can transmit the first indication information to the terminal in various manners, which is more flexible.

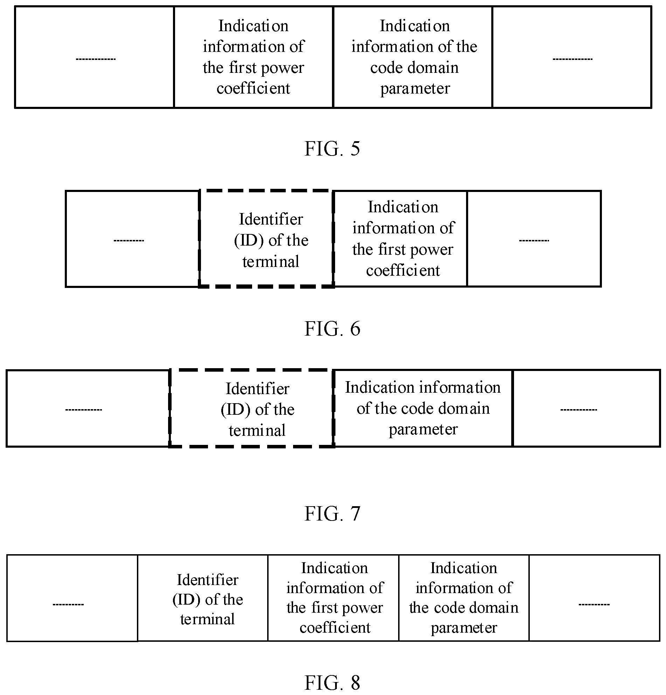

In an embodiment, as shown in FIG. 5 to FIG. 7, in a case that the first indication information is carried by DCI, the first power coefficient and the code domain parameter are carried by same DCI or different pieces of DCI.

Specifically, as shown in FIG. 5, the first power coefficient and the code domain parameter are carried by the same DCI, that is, indication information of the power coefficient and the code domain parameter can be included in the same DCI.

As shown in FIG. 6 and FIG. 7, the first power coefficient and the code domain parameter are carried by different pieces of DCI, that is, one piece of DCI includes the indication information of the power coefficient, and the other piece of DCI includes the indication information of the code domain parameter.

The indication information of the first power coefficient may be a value of the first power coefficient or an indication bit used to characterize the first power coefficient; and the indication information of the code domain parameter may be a value of the code domain parameter or an indication bit used to characterize the code domain parameter.

In an embodiment, in a case that the first indication information is carried by DCI, the DCI is scrambled by an identifier of the terminal or a random number related to the identifier of the terminal, or the DCI carries the identifier of the terminal.

Specifically, as shown in FIG. 6 to FIG. 8, the DCI may carry an identifier (ID) of the terminal to indicate which terminal to send to, or the DCI is scrambled by the identifier of the terminal or the random number related to the identifier of the terminal, and a corresponding terminal may detect corresponding DCI, thereby obtaining the first power coefficient and code domain parameter.

In the foregoing implementations, the DCI is scrambled by the identifier of the terminal or the random number related to the identifier of the terminal, or the DCI carries the identifier of the terminal, so that the corresponding terminal can obtain the DCI corresponding to the terminal and obtain the first indication information carried by the DCI, so that the data transmission is carried out by using the at least two multiple access modes. The processing logic is simple, and the implementation complexity is low.

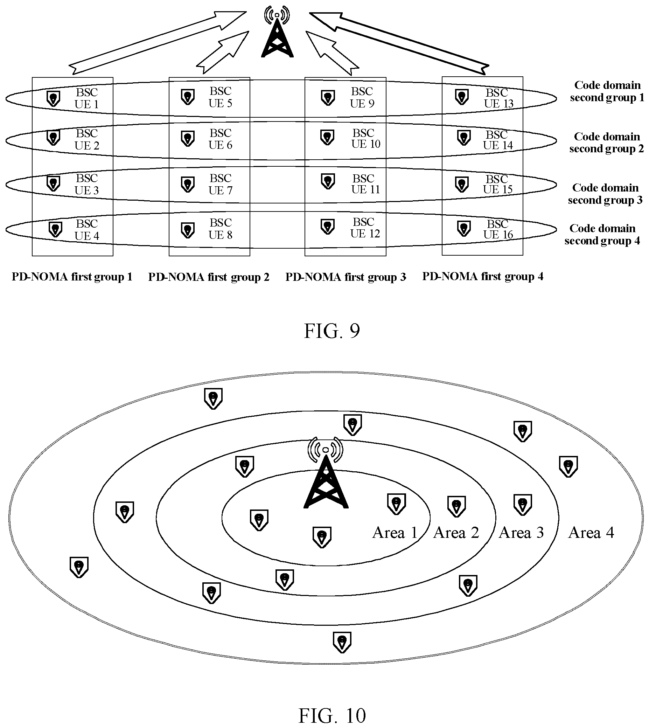

In an embodiment, as shown in FIG. 9, it is assumed that multiple terminals are evenly distributed, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

Specifically, when multiple terminals are evenly distributed in a coverage area of the network side device, that is, a terminal area is grouped based on a channel gain, the number of terminals in each channel gain area is the same or similar.

The first group is grouped based on the power domain multiple access mode, and the second group is grouped based on the code domain multiple access mode.

As shown in FIG. 9, there are 16 BSC UEs in the coverage area of the network side device, which are divided into 4 groups based on the channel gain area, namely, code domain second groups 1 to 4. User channel gains in each code domain second group are similar, so the same/similar first power coefficient but different code domain parameters, such as different spreading codes, are used. In addition, users with large channel gain differences are divided into power domain first groups 1 to 4. User channel gain differences in each PD-NOMA first group are large, so different first power coefficients, but the same code domain parameter, such as the same spreading code, are used.

If the terminal belongs to the first group, because the user channel gain difference in the first group is large, the terminal uses different first power coefficients, but the same code domain parameter.

As shown in FIG. 9, for example, UE 1, UE 2, UE 3, and UE 4 belong to the same first group, and code domain parameters of the UE 1, the UE 2, the UE 3, and the UE 4 are the same, and first power coefficients thereof are different from each other.

If the terminal belongs to the second group, because channel gains of terminals in the second group in the same code domain are similar, the network side device instructs terminals in the second group of the same code domain to use the same or similar first power coefficient, but different code domain parameters.

As shown in FIG. 9, for example, UE 1, UE 5, UE 9, and UE 13 belong to the same second group, and first power coefficients of the UE 1, the UE 5, the UE 9, and the UE 13 may be the same, but code domain parameters thereof are different from each other.

In the foregoing implementations, because the first power coefficients in the first group are different, and the code domain parameters of the terminals in the second group are different, the receive end can well distinguish signals of the terminals in the first group and the second group, which can meet the access requirements of a large number of terminals.

Optionally, the first group and the second group are grouped based on a difference of channel gains, where
a difference among channel gains of the terminals in the first group is greater than a second threshold, and a difference among channel gains of the terminals in the second group is less than a third threshold.

Specifically, as shown in FIG. 10, for terminals in an area 1 and terminals in an area 2, the difference among channel gains is relatively great because of different areas. The terminals in the area 1 can be grouped in various grouping methods based on the difference among channel gains because being close to the network side device.

As shown in FIG. 9, some terminals with large channel gain differences are in the same group in the power domain, which is recorded as a PD-NOMA first group 1; and other BSC UEs with large channel gain differences are in another group in the power domain, which is recorded as PD-NOMA first group 2, and the like. Some terminals with similar channel gains are in the same group in the code domain, which is recorded a code domain second group 1; and other terminals with similar channel gains are in another group in the code domain, which is recorded as a code domain second group 2, and the like.

Optionally, the second threshold and the third threshold may be pre-defined by the protocol, pre-configured by the network side device, pre-configured by the terminal, configured by the terminal, configured by the network side device, and the like.

Optionally, the network side device does not group or indicate a terminal whose channel gain is too small to meet scheduling criteria of hybrid multiple access communication or less than a demodulation threshold.

In the foregoing implementations, the multiple terminals are grouped based on the gain difference of channels on which the terminal transmits signals, so that the implementation complexity is low.

In an embodiment, the first power coefficients of the terminals in the second group may also be different in a scenario with uniform distribution; and a difference among the first power coefficients of the terminals in the second group is less than a first threshold, where the first power coefficients of the terminals in the second group can be determined based on a weighted value of total power and/or channel gains of terminals in a first group in which the terminal is located.

Specifically, as shown in FIG. 9, even if channel gains of terminals located in a second group of a same code domain are similar, in consideration of a cumulative difference of terminal channel gains in a power domain group where the terminals in the second group are located, a total power sum of all users in the power domain group where the terminals in the second group are located can be different, and a first power coefficient of each terminal in the code domain second group is adjusted, that is, first power coefficients of terminals can be different. However, the terminals in this scenario are more evenly distributed, so the difference among the first power coefficients is relatively small, for example, less than the first threshold.

The first power coefficient may be determined based on a weighted value of total power and/or channel gains of terminals in the power domain group.

For example, as shown in FIG. 9, terminals in the code domain second group 2 are used as an example. If a total power difference of all users in the power domain first group where the terminal is located is not considered, first reflection coefficients of all BSC UEs in the code domain second group 2 are all η₂, but different spreading codes are used. However, if the total power difference of all terminals in the power domain first group where the terminal is located is considered, the first reflection coefficients of BSC UEs in the code domain second group 2 are η_{2,1}, η_{2,2}, η_{2,3}, η_{2,4} respectively.

Optionally, the first power coefficients of the terminals in the second group can also be determined by using other parameters, which is not limited in this embodiment of this application.

For example, other parameters include, but are not limited to, a sum of squares of channel gains, a sum of modulus of channel gains, and the like.

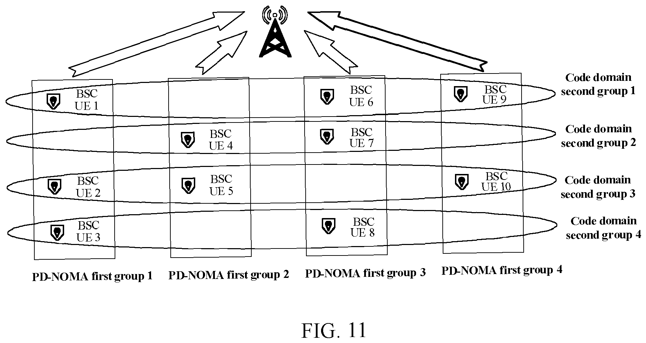

In an embodiment, as shown in FIG. 11, distribution of multiple terminals in this scenario is uneven. If the terminals belong to the first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

Specifically, as shown in FIG. 11, in this scenario, the number of terminals in code domain second groups with similar channel gains may be different; and based on the channel gain difference, groups are grouped based on the power domain, and the number of terminals in first groups may also be different. In this scenario, even terminals with similar channel gains but belonging to different first groups have a great difference among the first power coefficients. However, in the same first group, the first power coefficients of terminals will also show a great difference due to the number of terminals in the first group.

For example, UE 1, UE 2, and UE 3 belong to the same first group, and first power coefficients of the UE 1, the UE 2, and the UE 3 are different, but code domain parameters thereof are the same.

For example, UE 1, UE 6, and UE 9 belong to the same second group, and code domain parameters of the UE 1, the UE 6, and the UE 9 are different. Because the number and distribution of terminals in first groups where the UE 1, the UE 6, and the UE 9 are respectively located are different, the first power coefficients of the UE 1, the UE 6, and the UE 9 are also different.

Optionally, a difference among the first power coefficients of the terminals in the first group is greater than a fourth threshold, where the first power coefficients of the terminals in the first group may be determined based on a weighted value of total power and/or channel gains of terminals in a group of a power domain where the terminal is located; and
a difference among the first power coefficients of the terminals in the second group is greater than a fifth threshold, where the first power coefficients of the terminals in the second group may be determined based on a weighted value of total power and/or channel gains of terminals in a group of a power domain where the terminal is located.

Specifically, a difference among the first power coefficients of the terminals in the first group is greater than a fourth threshold, and a difference among the first power coefficients of the terminals in the second group is greater than a fifth threshold.

First power coefficients of terminals respectively in the first group and the second group may be determined based on a weighted value of total power and/or channel gains of terminals in a group of a power domain where the terminal is located.

Optionally, the first power coefficients of the terminals in the first group and the second group can also be determined by using other parameters, which is not limited in this embodiment of this application.

In the foregoing implementations, because the first power coefficients in the first group are different, and the first power coefficients and the code domain parameters of the terminals in the second group are different, the receive end can well distinguish signals of the terminals in the first group and the second group, which can meet the access requirements of a large number of terminals.

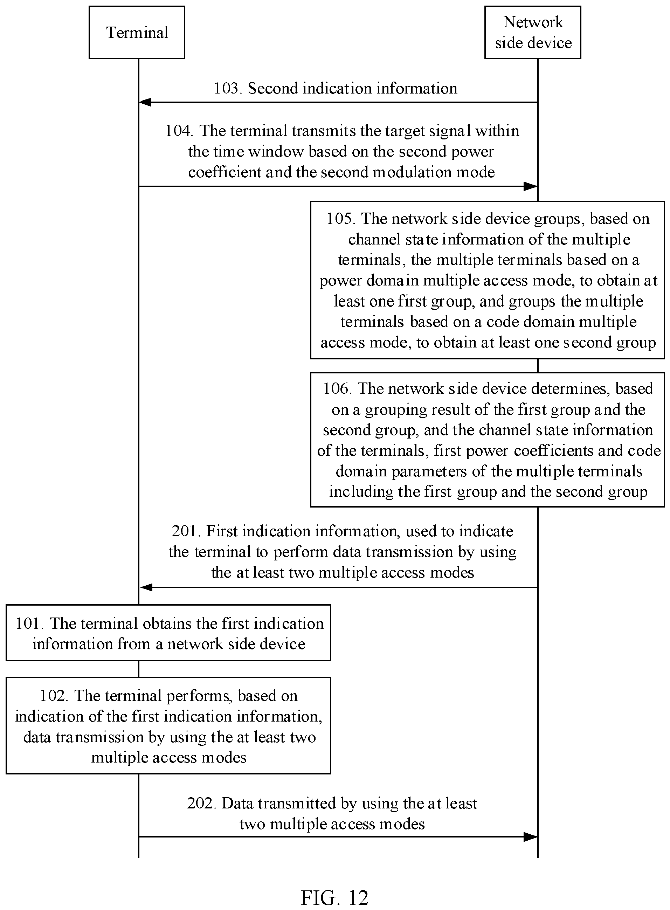

In an embodiment, as shown in FIG. 12, the method may further include the following steps.

Step 103. The terminal obtains second indication information from a network side device, where the second indication information is used to indicate a second power coefficient, a second modulation mode, and a time window used by the terminal to transmit a target signal.

Step 104. The terminal transmits the target signal within the time window based on the second power coefficient and the second modulation mode, where the target signal is used by the network side device to obtain channel state information, and determine, based on the channel state information, the first indication information required to be sent, and send the first indication information.

Specifically, as shown in FIG. 12, the network side device sends second indication information, and the terminal obtains the second indication information from the network side device, where the second indication information is used to indicate a second power coefficient, a second modulation mode, and a time window used by the terminal to transmit a target signal;
the terminal transmits the target signal within the time window based on the second power coefficient and the second modulation mode; and
after receiving the target signal, the network side device determines parameters corresponding to the multiple access mode used by the terminal. For example, as shown in step 105 and 106 in FIG. 12, channel state information (Channel State Information, CSI) of multiple terminals is obtained based on target signals transmitted by multiple terminals, and the multiple terminals are grouped in different modes based on the channel state information. The parameters corresponding to the multiple access modes used by the terminals are determined based on a grouping result.

Optionally, the multiple terminals are grouped based on the power domain NOMA and the code domain multiple access mode. For details, refer to the foregoing embodiments, and details are not described herein again.

After determining the parameters corresponding to the multiple access mode used by the terminal, the network side device sends the first indication information to the terminal, which is used for instructing the terminal to use at least two multiple access modes indicated by the first indication information for data transmission.

Optionally, if the terminal is a backscatter communication (BSC) terminal, the second power coefficient is a second reflection coefficient, where
the second reflection coefficient is a maximum reflection coefficient supported by the terminal or a reflection coefficient determined by a network side device.

Optionally, the second modulation mode includes a modulation mode supporting phase modulation.

For example, the second modulation mode can be PSK, QAM, and other modulation modes.

Optionally, a parameter of the time window is configured according to at least one of the following:
a media access control control element (MAC CE); and
a radio resource control (RRC) message.

Specifically, the network side device may determine a size of the time window based on a service type of the terminal, and configure a time window parameter by using an RRC message, a MAC CE, or the like. For a BSC terminal that can obtain energy from the environment and immediately perform backscatter transmission, a relatively small time window can be configured; and for a BSC terminal that needs to store energy for a period of time before performing backscatter transmission, a larger time window can be configured.

In the foregoing implementations, the network side device transmits the second indication information to the terminal; the second indication information is used to indicate the second power coefficient, the second modulation mode, and the time window used by the terminal to transmit the target signal; and the terminal transmits the target signal within a time window based on the second power coefficient and the second modulation mode, and the network side device determines the parameters corresponding to at least two multiple access modes corresponding to the terminal based on the received target signal, and sends the first indication information for indicating the parameters corresponding to the at least two multiple access modes to the terminal, so that the terminal can use the at least two multiple access modes for data transmission, to meet the access requirements of a large number of terminals.

In an embodiment, if the second indication information carries the identifier of the terminal, or the second indication information is carried by DCI bound to the terminal, the target signal does not carry the identifier of the terminal; and
if the second indication information is sent by a broadcast signal, or is carried by group DCI including the terminal, the target signal is scrambled by the identifier of the terminal or a random number related to the identifier of the terminal, or carries the identifier of the terminal.

Specifically, if the second indication information carries the identifier of the terminal, the target signal may or may not carry the identifier of the terminal; and if the identifier of the terminal is not carried, signaling transmission can be reduced.

Alternatively, if the second indication information is carried by DCI bound to the terminal, the target signal may or may not carry the identifier of the terminal; and if the identifier of the terminal is not carried, signaling transmission can be reduced.

If the second indication information does not carry the identifier of the terminal, for example, the second indication information is sent by a broadcast signal or carried by group DCI including the terminal, the target signal needs to carry the identifier of the terminal, or the target signal needs to be scrambled by the identifier of the terminal or a random number related to the identifier of the terminal.

In the foregoing implementations, if the second indication information carries the identifier of the terminal, or the second indication information is carried by DCI bound to the terminal, the target signal may not carry the identifier of the terminal, thus reducing signaling overheads; and if the second indication information is sent by a broadcast signal or carried by group DCI including the terminal, the target signal is scrambled by the identifier of the terminal or a random number related to the identifier of the terminal, or carries the identifier of the terminal, so that the network side device can quickly identify which terminal transmitting the target signal, and the implementation complexity is low.

In an embodiment, the second indication information is carried by using at least one of the following:
a trigger signal carrying the identifier of the terminal;
a broadcast signal;
a preamble;
DCI corresponding to the terminal; and
group DCI including the terminal.

Specifically, the network side device can separately send a trigger signal carrying the identifier (ID) of the terminal to multiple terminals, such as a non-periodic channel state information reference signal (Channel State Information Reference Signal, CSI-RS), and the trigger signal is used to trigger the terminals to send the target signal.

The network side device can send broadcast signals to multiple terminals to trigger the terminals to send the target signal.

The network side device can trigger the terminal to send the target signal by sending DCI corresponding to the terminal, such as DCI indication information bound to the terminal.

The network side device is used to trigger terminals in a group corresponding to the group DCI to send the target signal by sending group DCI indication information.

In the foregoing implementations, the second indication information is carried in various manners, which is more flexible.

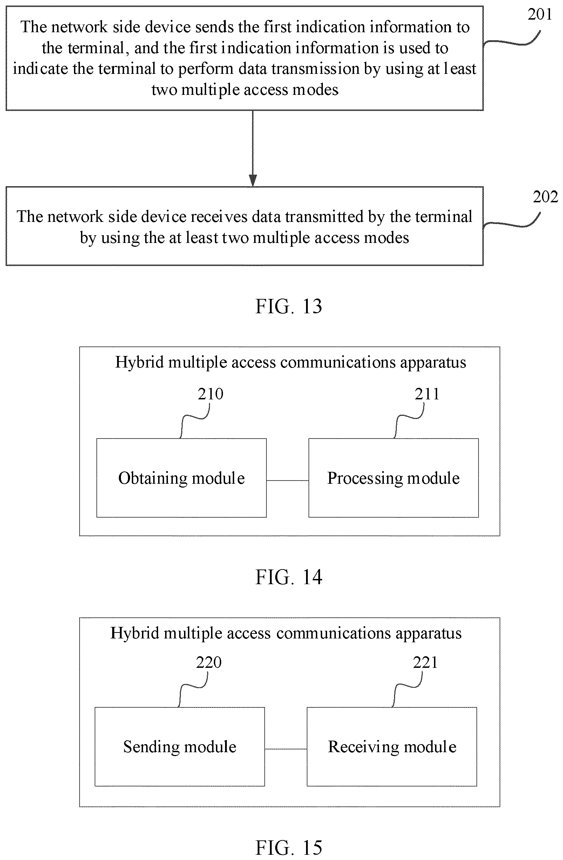

FIG. 13 is a second schematic flowchart of a hybrid multiple access communications method according to an embodiment of this application. As shown in FIG. 13, the hybrid multiple access communications method provided in this embodiment includes the following steps.

Step 201. A network side device sends first indication information to a terminal, where the first indication information is used to indicate the terminal to perform data transmission by using at least two multiple access modes.

Step 202. The network side device receives data transmitted by the terminal by using the at least two multiple access modes.

Optionally, as shown in FIG. 12, the method further includes the following steps.

Step 105. The network side device groups, based on channel state information of the multiple terminals, the multiple terminals based on a power domain multiple access mode, to obtain at least one first group, and groups the multiple terminals based on a code domain multiple access mode, to obtain at least one second group.

Step 106. The network side device determines, based on a grouping result of the first group and the second group, and the channel state information of the terminals, first power coefficients and code domain parameters of the multiple terminals including the first group and the second group.

Optionally, the at least two multiple access modes include a power domain multiple access mode and a code domain multiple access mode; and
the parameters include a first power coefficient and a code domain parameter, the first power coefficient is used by the terminal to perform data transmission by using the power domain multiple access mode, and the code domain parameter is used by the terminal to perform data transmission by using the code domain multiple access mode.

Optionally, the method further includes:
sending, by the network side device, second indication information to the multiple terminals, where the second indication information is used to indicate a second power coefficient, a second modulation mode, and a time window used by the multiple terminals to transmit a signal;
separately receiving, by the network side device, target signals transmitted by the multiple terminals, where the target signals are transmitted by the multiple terminals within the time window based on the second power coefficient and the second modulation mode; and
obtaining, by the network side device, channel state information of the multiple terminals based on the target signals transmitted by the multiple terminals.

Optionally, the code domain multiple access mode includes at least one of the following: a code domain non-orthogonal multiple access (NOMA) mode, code division multiple access (CDMA) mode, and multi-user shared access (MUSA), where
the code domain parameter is a spreading code or a spreading sequence.

Optionally, the spreading code includes at least one of the following:
an orthogonal or quasi-orthogonal spreading code;
a low density signature (LDS); and
a complex field multivariate code, where
the orthogonal spreading code includes a Walsh spreading code sequence; and the quasi-orthogonal spreading code includes at least one of the following: a PN sequence, a Gold code, and a KASAMI code.

Optionally, the first indication information is carried by at least one of the following:
downlink control information (DCI);
a sequence;
a preamble; and
a media access control control element (MAC CE).

Optionally, in a case that the first indication information is carried by DCI, the DCI is scrambled by an identifier of the terminal or a random number related to the identifier of the terminal, or the DCI carries the identifier of the terminal.

Optionally, in a case that the first indication information is carried by DCI, the first power coefficient and the code domain parameter are carried by same DCI or different pieces of DCI.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

Optionally, first power coefficients of terminals in the second group are different, and a difference among the first power coefficients of the terminals in the second group is less than a first threshold, where the first power coefficients of the terminals in the second group are determined based on a weighted value of total power and/or channel gains of terminals in a first group in which the terminal is located.

Optionally, the first group and the second group are grouped based on a difference of channel gains, where
a difference among channel gains of the terminals in the first group is greater than a second threshold, and a difference among channel gains of the terminals in the second group is less than a third threshold.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

Optionally, a difference among the first power coefficients of the terminals in the first group is greater than a fourth threshold, where the first power coefficients of the terminals in the first group are determined based on a weighted value of total power and/or channel gains of terminals in the first group; and
a difference among the first power coefficients of the terminals in the second group is greater than a fifth threshold, where the first power coefficients of the terminals in the second group are determined based on a weighted value of total power and/or channel gains of terminals in the first group in which the terminal is located.

Optionally, the first indication information is further used to indicate at least one of the following: a first modulation mode, a first channel coding mode, and first resource information.

Optionally, if the second indication information carries the identifier of the terminal, or the second indication information is carried by DCI corresponding to the terminal, the target signal does not carry the identifier of the terminal; and
if the second indication information is sent by a broadcast signal, or is carried by group DCI including the terminal, the target signal is scrambled by the identifier of the terminal or a random number related to the identifier of the terminal, or carries the identifier of the terminal.

Optionally, the second indication information is carried by at least one of the following:
a trigger signal carrying the identifier of the terminal;
a broadcast signal;
a preamble;
DCI corresponding to the terminal; and
group DCI including the terminal.

Optionally, if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by a network side device.

Optionally, the second modulation mode includes a modulation mode supporting phase modulation.

Optionally, a parameter of the time window is configured according to at least one of the following:
a media access control control element (MAC CE); and
a radio resource control (RRC) message.

A specific implementation process and technical effects of the method in this embodiment are similar to those in the method embodiment at the terminal side. For details, refer to the detailed description in the method embodiment at the terminal side, and details are not described herein again.

The hybrid multiple access communications method provided in this embodiment of this application may be performed by a hybrid multiple access communications apparatus. In the embodiments of this application, that the hybrid multiple access communications apparatus performs the hybrid multiple access communications method is used as an example to describe the hybrid multiple access communications apparatus provided in the embodiments of this application.

FIG. 14 is a first schematic diagram of a structure of a hybrid multiple access communications method according to an embodiment of this application. As shown in FIG. 14, the hybrid multiple access communications apparatus provided in this embodiment includes:
an obtaining module 210, configured to obtain first indication information from a network side device, where the first indication information is used to indicate the terminal to perform data transmission by using at least two multiple access modes; and
a processing module 211, configured to perform, based on indication of the first indication information, data transmission by using the at least two multiple access modes.

According to the apparatus in this embodiment, the obtaining module obtains first indication information from the network side device, where the first indication information is used to indicate the terminal to perform data transmission by using at least two multiple access modes. The processing module performs, based on indication of the first indication information, data transmission by using the at least two multiple access modes. In a scenario where there are multiple terminals, because the multiple terminals respectively use a plurality of multiple access modes to transmit data, the interference between transmission signals of the multiple terminals is small, so that the receive end can improve the accuracy and efficiency of signal detection, thus meeting the access requirements of a large number of terminals.

Optionally, the at least two multiple access modes include a power domain multiple access mode and a code domain multiple access mode; and
parameters corresponding to the at least two multiple access modes include a first power coefficient and a code domain parameter, the first power coefficient is used by the terminal to perform data transmission by using the power domain multiple access mode, and the code domain parameter is used by the terminal to perform data transmission by using the code domain multiple access mode.

Optionally, the code domain multiple access mode includes at least one of the following: a code domain non-orthogonal multiple access mode, code division multiple access mode, and multi-user shared access (MUSA), where
the code domain parameter is a spreading code or a spreading sequence.

Optionally, the spreading code includes at least one of the following:
an orthogonal or quasi-orthogonal spreading code;
a low density signature (LDS); and
a complex field multivariate code, where
the orthogonal spreading code includes a Walsh spreading code sequence; and the quasi-orthogonal spreading code includes at least one of the following: a PN sequence, a Gold code, and a KASAMI code.

Optionally, the first indication information is carried by at least one of the following:
downlink control information (DCI);
a sequence;
a preamble; and
a media access control control element (MAC CE).

Optionally, in a case that the first indication information is carried by DCI, the DCI is scrambled by an identifier of the terminal or a random number related to the identifier of the terminal, or the DCI carries the identifier of the terminal.

Optionally, in a case that the first indication information is carried by DCI, the first power coefficient and the code domain parameter are carried by same DCI or different pieces of DCI.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

Optionally, first power coefficients of terminals in the second group are different, and a difference among the first power coefficients of the terminals in the second group is less than a first threshold, where the first power coefficients of the terminals in the second group are determined based on a weighted value of total power and/or channel gains of terminals in a power domain first group in which the terminal is located.

Optionally, the first group and the second group are grouped based on a difference of channel gains, where
a difference among channel gains of the terminals in the first group is greater than a second threshold, and a difference among channel gains of the terminals in the second group is less than a third threshold.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

Optionally, a difference among the first power coefficients of the terminals in the first group is greater than a fourth threshold, where the first power coefficients of the terminals in the first group are determined based on a weighted value of total power and/or channel gains of terminals in the first group; and
a difference among the first power coefficients of the terminals in the second group is greater than a fifth threshold, where the first power coefficients of the terminals in the second group are determined based on a weighted value of total power and/or channel gains of terminals in the first group in which the terminal is located.

Optionally, the first indication information is further used to indicate at least one of the following: a first modulation mode, a first channel coding mode, and first resource information.

Optionally, the obtaining module 210 is further configured to:
obtain second indication information from a network side device, where the second indication information is used to indicate a second power coefficient, a second modulation mode, and a time window used by the terminal to transmit a target signal; and
the processing module 211 is further configured to transmit the target signal within the time window based on the second power coefficient and the second modulation mode, where the target signal is used by the network side device to send the first indication information based on the target signal.

Optionally, if the second indication information carries the identifier of the terminal, or the second indication information is carried by DCI corresponding to the terminal, the target signal does not carry the identifier of the terminal; and
if the second indication information is sent by a broadcast signal, or is carried by group DCI including the terminal, the target signal is scrambled by the identifier of the terminal or a random number related to the identifier of the terminal, or carries the identifier of the terminal.

Optionally, the second indication information is carried by at least one of the following:
a trigger signal carrying the identifier of the terminal;
a broadcast signal;
a preamble;
DCI corresponding to the terminal; and
group DCI including the terminal.

Optionally, if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by a network side device.

Optionally, the second modulation mode includes a modulation mode supporting phase modulation.

Optionally, a parameter of the time window is configured according to at least one of the following:
a media access control control element (MAC CE); and
a radio resource control (RRC) message.

The apparatus in this embodiment can be used to perform the method of any one of the method embodiments at the terminal side. A specific implementation process and technical effects of the apparatus are similar to those in the method embodiment at the terminal side. For details, refer to the detailed description in the method embodiment at the terminal side, and details are not described herein again.

FIG. 15 is a second schematic diagram of a structure of a hybrid multiple access communications apparatus according to an embodiment of this application. As shown in FIG. 15, the hybrid multiple access communications apparatus provided in this embodiment includes:
a sending module 220, configured to send first indication information to a terminal, where the first indication information is used to indicate parameters corresponding to at least two multiple access modes used by the terminal to perform data transmission; and
a receiving module 221, configured to receive data transmitted by the terminal by using the at least two multiple access modes.

Optionally, the at least two multiple access modes include a power domain multiple access mode and a code domain multiple access mode; and
parameters corresponding to the at least two multiple access modes include a first power coefficient and a code domain parameter, the first power coefficient is used by the terminal to perform data transmission by using the power domain multiple access mode, and the code domain parameter is used by the terminal to perform data transmission by using the code domain multiple access mode.

Optionally, the apparatus further includes:
a processing module, configured to: group, based on channel state information of the multiple terminals, the multiple terminals based on a power domain multiple access mode, to obtain at least one first group, and group the multiple terminals based on a code domain multiple access mode, to obtain at least one second group; and
determine, based on a grouping result of the first group and the second group, and the channel state information of the terminals, first power coefficients and code domain parameters of the multiple terminals including the first group and the second group.

Optionally, the sending module 220 is further configured to:
send second indication information to the multiple terminals, where the second indication information is used to indicate a second power coefficient, a second modulation mode, and a time window used by the multiple terminals to transmit a signal; and
the receiving module 221 is further configured to: separately receive target signals transmitted by the multiple terminals, where the target signals are transmitted by the multiple terminals within the time window based on the second power coefficient and the second modulation mode; and
obtain channel state information of the multiple terminals based on the target signals transmitted by the multiple terminals.

Optionally, the code domain multiple access mode includes at least one of the following: a code domain non-orthogonal multiple access (NOMA) mode, code division multiple access (CDMA) mode, and multi-user shared access (MUSA), where
the code domain parameter is a spreading code or a spreading sequence.

Optionally, the spreading code includes at least one of the following:
an orthogonal or quasi-orthogonal spreading code;
a low density signature (LDS); and
a complex field multivariate code, where
the orthogonal spreading code includes a Walsh spreading code sequence; and the quasi-orthogonal spreading code includes at least one of the following: a PN sequence, a Gold code, and a KASAMI code.

Optionally, the first indication information is carried by at least one of the following:
downlink control information (DCI);
a sequence;
a preamble; and
a media access control control element (MAC CE).

Optionally, in a case that the first indication information is carried by DCI, the DCI is scrambled by an identifier of the terminal or a random number related to the identifier of the terminal, or the DCI carries the identifier of the terminal.

Optionally, in a case that the first indication information is carried by DCI, the first power coefficient and the code domain parameter are carried by same DCI or different pieces of DCI.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

Optionally, first power coefficients of terminals in the second group are different, and a difference among the first power coefficients of the terminals in the second group is less than a first threshold, where the first power coefficients of the terminals in the second group are determined based on a weighted value of total power and/or channel gains of terminals in a first group in which the terminal is located.

Optionally, the first group and the second group are grouped based on a difference of channel gains, where
a difference among channel gains of the terminals in the first group is greater than a second threshold, and a difference among channel gains of the terminals in the second group is less than a third threshold.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

Optionally, a difference among the first power coefficients of the terminals in the first group is greater than a fourth threshold, where the first power coefficients of the terminals in the first group are determined based on a weighted value of total power and/or channel gains of terminals in the first group; and
a difference among the first power coefficients of the terminals in the second group is greater than a fifth threshold, where the first power coefficients of the terminals in the second group are determined based on a weighted value of total power and/or channel gains of terminals in the first group in which the terminal is located.

Optionally, the first indication information is further used to indicate at least one of the following: a first modulation mode, a first channel coding mode, and first resource information.

Optionally, if the second indication information carries the identifier of the terminal, or the second indication information is carried by DCI corresponding to the terminal, the target signal does not carry the identifier of the terminal; and
if the second indication information is sent by a broadcast signal, or is carried by group DCI including the terminal, the target signal is scrambled by the identifier of the terminal or a random number related to the identifier of the terminal, or carries the identifier of the terminal.

Optionally, the second indication information is carried by at least one of the following:
a trigger signal carrying the identifier of the terminal;
a broadcast signal;
a preamble;
DCI corresponding to the terminal; and
group DCI including the terminal.

Optionally, if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by a network side device.

Optionally, the second modulation mode includes a modulation mode supporting phase modulation.

Optionally, a parameter of the time window is configured according to at least one of the following:
a media access control control element (MAC CE); and
a radio resource control (RRC) message.

The apparatus in this embodiment can be used to perform the method of any one of the method embodiments at the network side. A specific implementation process and technical effects of the apparatus are similar to those in the method embodiment at the network side. For details, refer to the detailed description in the method embodiment at the network side, and details are not described herein again.

The hybrid multiple access communications apparatus in this embodiment of this application may be an apparatus or an apparatus or electronic device with an operating system, or may be a component, for example, an integrated circuit, or a chip in a terminal. The apparatus or electronic device may be a mobile terminal, or another non-mobile terminal device other than the terminal. For example, the mobile terminal may include but is not limited to the foregoing listed types of the terminal 11. The another non-mobile terminal device may be a server, a network attached storage (Network Attached Storage, NAS), a personal computer (personal computer, PC), a television (television, TV), a teller machine, or a self-service machine. This is not specifically limited in this embodiment of this application.

The hybrid multiple access communications apparatus provided in this embodiment of this application can implement the processes implemented in the method embodiments in FIG. 3 to FIG. 13, and achieve a same technical effect. To avoid repetition, details are not described herein again.

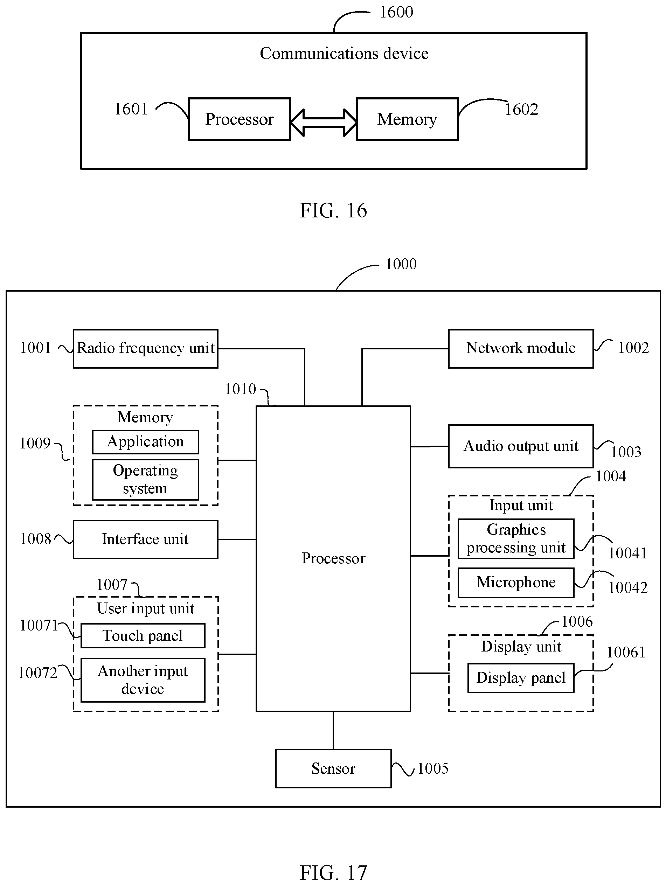

Optionally, as shown in FIG. 16, an embodiment of this application further provides a communications device 1600, including a processor 1601, a memory 1602, and a program or an instruction stored in the memory 1602 and executable on the processor 1601. For example, in a case that the communications device 1600 is a terminal, when the program or the instruction is executed by the processor 1601, the process steps of the hybrid multiple access communications method embodiment are implemented, with the same technical effects achieved. When the communications device 1600 is a network side device, the program or the instruction is executed by the processor 1601 to implement the processes of the hybrid multiple access communications method embodiment, and a same technical effect can be achieved. To avoid repetition, details are not described herein again.

An embodiment of this application further provides a terminal, including a processor and a communications interface, where the communications interface is configured to obtain first indication information from a network side device, the first indication information is used to indicate parameters corresponding to at least two multiple access modes used by the terminal to perform data transmission; and the processor is configured to perform, based on parameters corresponding to the at least two multiple access modes, data transmission by using the at least two multiple access modes. The terminal embodiment is corresponding to the terminal side method embodiment, each implementation process and implementation of the method embodiment can be applied to the terminal embodiment, and a same technical effect can be achieved. Specifically, FIG. 17 is a schematic diagram of a hardware structure of a terminal according to an embodiment of this application.

A terminal 1000 includes but is not limited to at least a part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 17 constitutes no limitation on the terminal, and the terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a function key (such as a volume control key or an on/off key), a trackball, a mouse, and a joystick. Details are not described herein again.

In this embodiment of this application, the radio frequency unit 1001 receives downlink data from a network side device and then sends the downlink data to the processor 1010 for processing; and the radio frequency unit 1001 may send uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a first storage area for storing a program or an instruction and a second storage area for storing data. The first storage area for the program or the instruction may store an operating system, and an application or an instruction required by at least one function (for example, a sound playing function or an image playing function). In addition, the memory 1009 may be a volatile memory or a non-volatile memory, or the memory 1009 may include a volatile memory and a non-volatile memory. The memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1009 in this embodiment of this application includes but is not limited to these memories and any memory of another proper type, for example, at least one disk storage device, a flash memory device, or other non-volatile solid state storage devices.

The processor 1010 may include one or more processing units. Optionally, an application processor and a modem processor may be integrated into the processor 1010. The application processor mainly processes an operating system, a user interface, an application or instruction, or the like. The modem processor mainly processes a wireless communication signal, for example, a baseband processor. It may be understood that, the modem processor may alternatively not be integrated into the processor 1010.

The radio frequency unit 1001 is configured to obtain first indication information from a network side device, where the first indication information is used to indicate parameters corresponding to at least two multiple access modes used by the terminal to perform data transmission; and
the processor 1010 is configured to perform, based on parameters corresponding to the at least two multiple access modes, data transmission by using the at least two multiple access modes.

In the foregoing implementations, the radio frequency unit obtains first indication information from the network side device, where the first indication information is used to indicate the terminal to perform data transmission by using at least two multiple access modes. The processor performs, based on indication of the first indication information, data transmission by using the at least two multiple access modes. In a scenario where there are multiple terminals, because the multiple terminals respectively use a plurality of multiple access modes to transmit data, the interference between transmission signals of the multiple terminals is small, so that the receive end can improve the accuracy and efficiency of signal detection, thus meeting the access requirements of a large number of terminals.

Optionally, the at least two multiple access modes include a power domain multiple access mode and a code domain multiple access mode; and
parameters corresponding to the at least two multiple access modes include a first power coefficient and a code domain parameter, the first power coefficient is used by the terminal to perform data transmission by using the power domain multiple access mode, and the code domain parameter is used by the terminal to perform data transmission by using the code domain multiple access mode.

Optionally, the code domain multiple access mode includes at least one of the following: a code domain non-orthogonal multiple access mode, code division multiple access mode, and multi-user shared access (MUSA), where
the code domain parameter is a spreading code or a spreading sequence.

Optionally, the spreading code includes at least one of the following:
an orthogonal or quasi-orthogonal spreading code;
a low density signature (LDS); and
a complex field multivariate code, where
the orthogonal spreading code includes a Walsh spreading code sequence; and the quasi-orthogonal spreading code includes at least one of the following: a PN sequence, a Gold code, and a KASAMI code.

In the foregoing implementations, NOMA can improve the overload rate of multi-user access on the basis of OMA, that is, the number of access terminals can be increased, and the code domain multiple access mode is further introduced on the basis of PD-NOMA, which can further increase the number of access terminals to meet the connection requirements of a large number of terminals.

Optionally, the first indication information is carried by at least one of the following:
downlink control information (DCI);
a sequence;
a preamble; and
a media access control control element (MAC CE).

In the foregoing implementations, the network side device can transmit the first indication information to the terminal in various manners, which is more flexible.

Optionally, in a case that the first indication information is carried by DCI, the DCI is scrambled by an identifier of the terminal or a random number related to the identifier of the terminal, or the DCI carries the identifier of the terminal.

In the foregoing implementations, the DCI is scrambled by the identifier of the terminal or the random number related to the identifier of the terminal, or the DCI carries the identifier of the terminal, so that the corresponding terminal can obtain the DCI corresponding to the terminal and obtain the first indication information carried by the DCI, so that the data transmission is carried out by using the at least two multiple access modes. The processing logic is simple, and the implementation complexity is low.

Optionally, in a case that the first indication information is carried by DCI, the first power coefficient and the code domain parameter are carried by same DCI or different pieces of DCI.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

Optionally, first power coefficients of terminals in the second group are different, and a difference among the first power coefficients of the terminals in the second group is less than a first threshold, where the first power coefficients of the terminals in the second group are determined based on a weighted value of total power and/or channel gains of terminals in a power domain first group in which the terminal is located.

In the foregoing implementations, because the first power coefficients in the first group are different, and the code domain parameters of the terminals in the second group are different, the receive end can well distinguish signals of the terminals in the first group and the second group, which can meet the access requirements of a large number of terminals.

Optionally, the first group and the second group are grouped based on a difference of channel gains, where
a difference among channel gains of the terminals in the first group is greater than a second threshold, and a difference among channel gains of the terminals in the second group is less than a third threshold.

In the foregoing implementations, the multiple terminals are grouped based on the gain difference of channels on which the terminal transmits signals, so that the implementation complexity is low.

Optionally, if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

Optionally, a difference among the first power coefficients of the terminals in the first group is greater than a fourth threshold, where the first power coefficients of the terminals in the first group are determined based on a weighted value of total power and/or channel gains of terminals in the first group; and
a difference among the first power coefficients of the terminals in the second group is greater than a fifth threshold, where the first power coefficients of the terminals in the second group are determined based on a weighted value of total power and/or channel gains of terminals in the first group in which the terminal is located.

In the foregoing implementations, because the first power coefficients in the first group are different, and the first power coefficients and the code domain parameters of the terminals in the second group are different, the receive end can well distinguish signals of the terminals in the first group and the second group, which can meet the access requirements of a large number of terminals.

Optionally, the first indication information is further used to indicate at least one of the following: a first modulation mode, a first channel coding mode, and first resource information.

Optionally, the radio frequency unit 1001 is further configured to:
obtain second indication information from a network side device, where the second indication information is used to indicate a second power coefficient, a second modulation mode, and a time window used by the terminal to transmit a target signal; and
the processor 1010 is further configured to transmit the target signal within the time window based on the second power coefficient and the second modulation mode, where the target signal is used by the network side device to send the first indication information based on the target signal.

In the foregoing implementations, the network side device transmits the second indication information to the terminal; the second indication information is used to indicate the second power coefficient, the second modulation mode, and the time window used by the terminal to transmit the target signal; and the terminal transmits the target signal within a time window based on the second power coefficient and the second modulation mode, and the network side device determines the parameters corresponding to at least two multiple access modes corresponding to the terminal based on the received target signal, and sends the first indication information for indicating the parameters corresponding to the at least two multiple access modes to the terminal, so that the terminal can use the at least two multiple access modes for data transmission, to meet the access requirements of a large number of terminals.

Optionally, if the second indication information carries the identifier of the terminal, or the second indication information is carried by DCI corresponding to the terminal, the target signal does not carry the identifier of the terminal; and
if the second indication information is sent by a broadcast signal, or is carried by group DCI including the terminal, the target signal is scrambled by the identifier of the terminal or a random number related to the identifier of the terminal, or carries the identifier of the terminal.

Optionally, the second indication information is carried by at least one of the following:
a trigger signal carrying the identifier of the terminal;
a broadcast signal;
a preamble;
DCI corresponding to the terminal; and
group DCI including the terminal.

In the foregoing implementations, the second indication information is carried in various manners, which is more flexible.

Optionally, if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by a network side device.

Optionally, the second modulation mode includes a modulation mode supporting phase modulation.

Optionally, a parameter of the time window is configured according to at least one of the following:
a media access control control element (MAC CE); and
a radio resource control (RRC) message.

An embodiment of this application further provides a network side device, including a processor and a communications interface, where the communications interface is configured to: send first indication information to a terminal, the first indication information is used to indicate parameters corresponding to at least two multiple access modes used by the terminal to perform data transmission; and receive data transmitted by the terminal by using the at least two multiple access modes. This network side device embodiment is corresponding to the foregoing method embodiment of the network side device. Each implementation process and implementation of the foregoing method embodiment may be applicable to this network side device embodiment, and a same technical effect can be achieved.

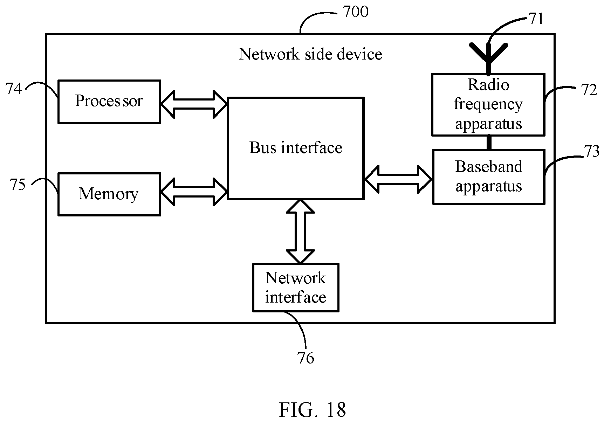

Specifically, an embodiment of this application further provides a network side device. As shown in FIG. 18, the network side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes information that needs to be sent, and sends processed information to the radio frequency apparatus 72. The radio frequency apparatus 72 processes the received information, and sends processed information by using the antenna 71.

The foregoing band processing apparatus may be located in the baseband apparatus 73. In the foregoing embodiment, a method performed by the network side device may be implemented in the baseband apparatus 73. The baseband apparatus 73 includes a baseband processor 74 and a memory 75.

The baseband apparatus 73 may include, for example, at least one baseband board. A plurality of chips are disposed on the baseband board. As shown in FIG. 18, one chip is, for example, the baseband processor 74, connected to the memory 75 through a bus interface, to invoke a program in the memory 75, thereby performing operations of the network device shown in the foregoing method embodiment.

The baseband apparatus 73 may further include a network interface 76, configured to exchange information with the radio frequency apparatus 72. For example, the interface is a common public radio interface (common public radio interface, CPRI for short).

Specifically, the network side device 700 in this embodiment of the present invention further includes an instruction or a program stored in the memory 75 and executable on the processor 74. The processor 74 invokes the instruction or the program in the memory 75 to perform the method performed by the modules shown in FIG. 15, with the same technical effect achieved. To avoid repetition, details are not described herein again.

An embodiment of this application further provides a readable storage medium, where the readable storage medium stores a program or an instruction, and when the program or the instruction is executed by a processor, the processes of the foregoing hybrid multiple access communications method embodiment are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communications interface, the communications interface is coupled to the processor, and the processor is configured to run a program or an instruction to implement the processes of the foregoing hybrid multiple access communications method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the foregoing hybrid multiple access communications method embodiment, and a same technical effect can be achieved. To avoid repetition, details are not described herein again.

An embodiment of this application further provides a communications system, including a terminal and a network side device, where the terminal may be configured to perform steps of the hybrid multiple access communications method as described above, and the network side device may be configured to perform steps of the hybrid multiple access communications method as described above.

It should be noted that in this specification, the term "include", "comprise", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A hybrid multiple access communications method, comprising:
obtaining, by a terminal, first indication information from a network side device, wherein the first indication information is used to indicate the terminal to perform data transmission by using at least two multiple access modes; and
performing, by the terminal based on indication of the first indication information, data transmission by using the at least two multiple access modes.

2. The hybrid multiple access communications method according to claim 1, wherein
the at least two multiple access modes comprise a power domain multiple access mode and a code domain multiple access mode; and
parameters corresponding to the at least two multiple access modes comprise a first power coefficient and a code domain parameter, the first power coefficient is used by the terminal to perform data transmission by using the power domain multiple access mode, and the code domain parameter is used by the terminal to perform data transmission by using the code domain multiple access mode.

3. The hybrid multiple access communications method according to claim 2, wherein
the code domain multiple access mode comprises at least one of the following: a code domain non-orthogonal multiple access mode, code division multiple access mode, and multi-user shared access (MUSA), wherein
the code domain parameter is a spreading code or a spreading sequence.

4. The hybrid multiple access communications method according to claim 3, wherein the spreading code comprises at least one of the following:
an orthogonal or quasi-orthogonal spreading code;
a low density signature (LDS); and
a complex field multivariate code, wherein
the orthogonal spreading code comprises a Walsh spreading code sequence; and the quasi-orthogonal spreading code comprises at least one of the following: a PN sequence, a Gold code, and a KASAMI code.

5. The hybrid multiple access communications method according to any one of claims 2 to 4, wherein the first indication information is carried by at least one of the following:
downlink control information (DCI);
a sequence;
a preamble; and
a media access control control element (MAC CE).

6. The hybrid multiple access communications method according to claim 5, wherein
in a case that the first indication information is carried by DCI, the DCI is scrambled by an identifier of the terminal or a random number related to the identifier of the terminal, or the DCI carries the identifier of the terminal.

7. The hybrid multiple access communications method according to claim 5, wherein
in a case that the first indication information is carried by DCI, the first power coefficient and the code domain parameter are carried by same DCI or different pieces of DCI.

8. The hybrid multiple access communications method according to any one of claims 2 to 4, wherein
if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

9. The hybrid multiple access communications method according to claim 8, wherein
first power coefficients of terminals in the second group are different, and a difference among the first power coefficients of the terminals in the second group is less than a first threshold, wherein the first power coefficients of the terminals in the second group are determined based on a weighted value of total power and/or channel gains of terminals in a power domain first group in which the terminal is located.

10. The hybrid multiple access communications method according to claim 8, wherein
the first group and the second group are grouped based on a difference of channel gains, wherein
a difference among channel gains of the terminals in the first group is greater than a second threshold, and a difference among channel gains of the terminals in the second group is less than a third threshold.

11. The hybrid multiple access communications method according to any one of claims 2 to 4, wherein
if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

12. The hybrid multiple access communications method according to claim 11, wherein
a difference among the first power coefficients of the terminals in the first group is greater than a fourth threshold, wherein the first power coefficients of the terminals in the first group are determined based on a weighted value of total power and/or channel gains of terminals in the first group; and
a difference among the first power coefficients of the terminals in the second group is greater than a fifth threshold, wherein the first power coefficients of the terminals in the second group are determined based on a weighted value of total power and/or channel gains of terminals in the first group in which the terminal is located.

13. The hybrid multiple access communications method according to any one of claims 1 to 4, wherein
the first indication information is further used to indicate at least one of the following: a first modulation mode, a first channel coding mode, and first resource information.

14. The hybrid multiple access communications method according to any one of claims 1 to 4, wherein the method further comprises:
obtaining, by the terminal, second indication information from the network side device, wherein the second indication information is used to indicate a second power coefficient, a second modulation mode, and a time window used by the terminal to transmit a target signal; and
transmitting, by the terminal, the target signal within the time window based on the second power coefficient and the second modulation mode, wherein the target signal is used by the network side device to send the first indication information based on the target signal.

15. The hybrid multiple access communications method according to claim 14, wherein
if the second indication information carries the identifier of the terminal, or the second indication information is carried by DCI corresponding to the terminal, the target signal does not carry the identifier of the terminal; and
if the second indication information is sent by a broadcast signal, or is carried by group DCI comprising the terminal, the target signal is scrambled by the identifier of the terminal or a random number related to the identifier of the terminal, or carries the identifier of the terminal.

16. The hybrid multiple access communications method according to claim 14, wherein the second indication information is carried by at least one of the following:
a trigger signal carrying the identifier of the terminal;
a broadcast signal;
a preamble;
DCI corresponding to the terminal; and
group DCI comprising the terminal.

17. The hybrid multiple access communications method according to any one of claims 2 to 4 or claim 14, wherein
if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by the network side device.

18. The hybrid multiple access communications method according to claim 14, wherein
the second modulation mode comprises a modulation mode supporting phase modulation.

19. The hybrid multiple access communications method according to claim 14, wherein
a parameter of the time window is configured according to at least one of the following:
a media access control control element (MAC CE); and
a radio resource control (RRC) message.

20. A hybrid multiple access communications method, comprising:
sending, by a network side device, first indication information to a terminal, wherein the first indication information is used to indicate the terminal to perform data transmission by using at least two multiple access modes; and
receiving, by the network side device, data transmitted by the terminal by using the at least two multiple access modes.

21. The hybrid multiple access communications method according to claim 20, wherein
the at least two multiple access modes comprise a power domain multiple access mode and a code domain multiple access mode; and
parameters corresponding to the at least two multiple access modes comprise a first power coefficient and a code domain parameter, the first power coefficient is used by the terminal to perform data transmission by using the power domain multiple access mode, and the code domain parameter is used by the terminal to perform data transmission by using the code domain multiple access mode.

22. The hybrid multiple access communications method according to claim 21, wherein the method further comprises:
grouping, by the network side device based on channel state information of multiple terminals, the multiple terminals based on a power domain multiple access mode, to obtain at least one first group, and grouping the multiple terminals based on a code domain multiple access mode, to obtain at least one second group; and
determining, by the network side device based on a grouping result of a first group and a second group, and the channel state information of the terminals, first power coefficients and code domain parameters of the multiple terminals comprising the first group and the second group.

23. The hybrid multiple access communications method according to claim 22, wherein the method further comprises:
sending, by the network side device, second indication information to the multiple terminals, wherein the second indication information is used to indicate a second power coefficient, a second modulation mode, and a time window used by the multiple terminals to transmit a signal;
separately receiving, by the network side device, target signals transmitted by the multiple terminals, wherein the target signals are transmitted by the multiple terminals within the time window based on the second power coefficient and the second modulation mode; and
obtaining, by the network side device, the channel state information of the multiple terminals based on the target signals transmitted by the multiple terminals.

24. The hybrid multiple access communications method according to any one of claims 21 to 23, wherein
the code domain multiple access mode comprises at least one of the following: a code domain non-orthogonal multiple access (NOMA) mode, code division multiple access (CDMA) mode, and multi-user shared access (MUSA), wherein
the code domain parameter is a spreading code or a spreading sequence.

25. The hybrid multiple access communications method according to claim 24, wherein
the spreading code comprises at least one of the following:
an orthogonal or quasi-orthogonal spreading code;
a low density signature (LDS); and
a complex field multivariate code, wherein
the orthogonal spreading code comprises a Walsh spreading code sequence; and the quasi-orthogonal spreading code comprises at least one of the following: a PN sequence, a Gold code, and a KASAMI code.

26. The hybrid multiple access communications method according to any one of claims 21 to 23, wherein the first indication information is carried by at least one of the following:
downlink control information (DCI);
a sequence;
a preamble; and
a media access control control element (MAC CE).

27. The hybrid multiple access communications method according to claim 26, wherein
in a case that the first indication information is carried by DCI, the DCI is scrambled by an identifier of the terminal or a random number related to the identifier of the terminal, or the DCI carries the identifier of the terminal.

28. The hybrid multiple access communications method according to claim 26, wherein
in a case that the first indication information is carried by DCI, the first power coefficient and the code domain parameter are carried by same DCI or different pieces of DCI.

29. The hybrid multiple access communications method according to claim 22 or 23, wherein
if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are the same.

30. The hybrid multiple access communications method according to claim 29, wherein
first power coefficients of terminals in the second group are different, and a difference among the first power coefficients of the terminals in the second group is less than a first threshold, wherein the first power coefficients of the terminals in the second group are determined based on a weighted value of total power and/or channel gains of terminals in a first group in which the terminal is located.

31. The hybrid multiple access communications method according to claim 29, wherein
the first group and the second group are grouped based on a difference of channel gains, wherein
a difference among channel gains of the terminals in the first group is greater than a second threshold, and a difference among channel gains of the terminals in the second group is less than a third threshold.

32. The hybrid multiple access communications method according to claim 22 or 23, wherein
if the terminal belongs to a first group grouped based on the power domain multiple access mode, a first power coefficient used by the terminal is different from a first power coefficient used by another terminal in the first group, and code domain parameters used by terminals in the first group are the same; and
if the terminal belongs to a second group grouped based on the code domain multiple access mode, a code domain parameter used by the terminal is different from a code domain parameter used by another terminal in the second group, and first power coefficients used by terminals in the second group are also different.

33. The hybrid multiple access communications method according to claim 32, wherein
a difference among the first power coefficients of the terminals in the first group is greater than a fourth threshold, wherein the first power coefficients of the terminals in the first group are determined based on a weighted value of total power and/or channel gains of terminals in the first group; and
a difference among the first power coefficients of the terminals in the second group is greater than a fifth threshold, wherein the first power coefficients of the terminals in the second group are determined based on a weighted value of total power and/or channel gains of terminals in the first group in which the terminal is located.

34. The hybrid multiple access communications method according to any one of claims 20 to 23, wherein
the first indication information is further used to indicate at least one of the following: a first modulation mode, a first channel coding mode, and first resource information.

35. The hybrid multiple access communications method according to claim 23, wherein
if the second indication information carries the identifier of the terminal, or the second indication information is carried by DCI corresponding to the terminal, the target signal does not carry the identifier of the terminal; and
if the second indication information is sent by a broadcast signal, or is carried by group DCI comprising the terminal, the target signal is scrambled by the identifier of the terminal or a random number related to the identifier of the terminal, or carries the identifier of the terminal.

36. The hybrid multiple access communications method according to claim 23 or 35, wherein the second indication information is carried by at least one of the following:
a trigger signal carrying the identifier of the terminal;
a broadcast signal;
a preamble;
DCI corresponding to the terminal; and
group DCI comprising the terminal.

37. The hybrid multiple access communications method according to claim 23 or 35, wherein
if the terminal is a backscatter communication (BSC) terminal, the first power coefficient is a first reflection coefficient, and the second power coefficient is a second reflection coefficient; and
the second reflection coefficient is a maximum reflection coefficient supported by the terminal or a reflection coefficient determined by the network side device.

38. The hybrid multiple access communications method according to claim 23 or 35, wherein
the second modulation mode comprises a modulation mode supporting phase modulation.

39. The hybrid multiple access communications method according to claim 23 or 35, wherein
a parameter of the time window is configured according to at least one of the following:
a media access control control element (MAC CE); and
a radio resource control (RRC) message.

40. A hybrid multiple access communications apparatus, comprising:
an obtaining module, configured to obtain first indication information from a network side device, wherein the first indication information is used to indicate the terminal to perform data transmission by using at least two multiple access modes; and
a processing module, configured to perform, based on indication of the first indication information, data transmission by using the at least two multiple access modes.

41. A hybrid multiple access communications apparatus, comprising:
a sending module, configured to send first indication information to a terminal, wherein the first indication information is used to indicate the terminal to perform data transmission by using at least two multiple access modes; and
a receiving module, configured to receive data transmitted by the terminal by using the at least two multiple access modes.

42. A terminal, comprising a processor and a memory, wherein the memory stores a program or an instruction executable on the processor and a program or an instruction stored in the memory and executable on the processor, and when the program or the instruction is executed by the processor, steps of the hybrid multiple access communications method according to any one of claims 1 to 19 are implemented.

43. A network side device, comprising a processor and a memory, wherein the memory stores a program or an instruction executable on the processor and a program or an instruction stored in the memory and executable on the processor, and when the program or the instruction is executed by the processor, steps of the hybrid multiple access communications method according to any one of claims 20 to 39 are implemented.

44. A readable storage medium, wherein the readable storage medium stores a program or an instruction, and when the program or the instruction is executed by a processor, steps of the hybrid multiple access communications method according to any one of claims 1 to 19 are implemented, or steps of the hybrid multiple access communications method according to any one of claims 20 to 39 are implemented.

45. A chip, comprising a processor and a communications interface, wherein the communications interface is coupled to the processor, and the processor is configured to run a program or an instruction to implement steps of the hybrid multiple access communications method according to any one of claims 1 to 19, or steps of the hybrid multiple access communications method according to any one of claims 20 to 39.

46. A computer program/program product, wherein the computer program/program product is stored in a non-transient storage medium, and the program/program product is executed by at least one processor to implement steps of the hybrid multiple access communications method according to any one of claims 1 to 19, or steps of the hybrid multiple access communications method according to any one of claims 20 to 39.
